# EUROPEAN PATENT APPLICATION

(11) **EP 4 693 621 A1**
(43) Date of publication of application: **11.02.2026**
(21) Application number: 24927595.9
(22) Date of filing: 12.12.2024
(51) Int. Cl.: H01M 10/658, H01M 50/204, B60L 50/64

(54) **BATTERY PACK AND VEHICLE INCLUDING SAME**

(30) Priority: 12.06.2024 KR 20240076517
(71) Applicant: LG ENERGY SOLUTION, LTD., Seoul 07335 (KR)
(72) Inventor: HEO, Sam Hoe, Daejeon 34122 (KR); PARK, Dong Ho, Daejeon 34122 (KR); LEE, Gi Hwan, Daejeon 34122 (KR); KIM, Jong Jin, Daejeon 34122 (KR); PARK, Jeong Jae, Daejeon 34122 (KR); LEE, Hyun Jun, Daejeon 34122 (KR)
(74) Representative: BCKIP Part mbB
(86) International application number: PCT/KR2024/020287
(87) International publication number: WO 2025/258766

(57) **Abstract**

Disclosed are a battery pack for improving stability by blocking or delaying transfer of heat or flame generated in a specific cell block to adjacent cell blocks, and a vehicle including the battery pack.

## Description

### [TECHNICAL FIELD]

The present disclosure relates to a battery pack for blocking or delaying transfer of heat or flame generated in a specific cell block to an adjacent cell block to improve stability, and a vehicle including the same.

### [BACKGROUND ART]

Recently, technologies for reducing carbon are being actively developed to solve environmental problems such as abnormal temperatures. In order to reduce carbon, it is necessary to produce energy in an eco-friendly manner rather than producing energy using fossil fuels, store the produced energy in the form of electric energy, and use the stored electric energy in vehicles, various industrial sites, and homes.

In order to utilize electric energy for reducing carbon, the use of a battery that can store and extract electric energy is essential. Therefore, in order to sufficiently store electric energy and use the same without inconvenience, it is necessary to secure the performance of the battery.

Batteries mainly utilize the oxidation-reduction reaction of metal ions, high-density metal ions are used to increase the capacity, charge/discharge performance, and efficiency of a battery, and much research is being conducted on materials constituting electrolytes and solid electrolytes. However, as battery performance improves, there is a problem of decreased stability in general.

Batteries used in vehicles, industries, and homes are manufactured as physical units called packs. A battery pack performs functions of preventing fire from spreading to the outside in the event of an accident such as battery thermal runaway by embedding multiple battery cells inside a battery case and sealing the same, and protecting the internal battery cells from deterioration due to the influence of the external environment or damage due to physical factors.

Multiple battery cells are embedded in a battery pack in an intermediate form of a module or an assembly (cell module assembly (CMA)). In the case of a battery module or assembly, multiple battery cells are assembled into a single module or assembly, and multiple modules are fastened inside a pack case, thereby completing a battery pack. When servicing a battery, maintenance is made easy by allowing maintenance to be performed in units of such modules or assemblies.

Meanwhile, batteries may deteriorate due to manufacturing errors, excessive charging and discharging, and aging. If battery deterioration continues, it can eventually cause a fire.

In particular, when a thermal runway (TR) occurs in a battery cell inside a battery pack, strong flames, gases, and heat are emitted from the battery cell and flow inside the battery pack. This flow causes the heat or flame to be transferred to adjacent battery cells inside the battery pack. Such heat or flame is one of the causes of simultaneous TR generation in battery cells inside the battery pack.

Therefore, it is necessary to prepare a structure capable of preventing the transfer of such heat or flame inside a battery pack or decrease a transfer speed to prevent the aforementioned problems.

The matters described as background technology above are only intended to enhance understanding of the background of the present disclosure and should not be taken as an acknowledgment that they correspond to prior art already known to those skilled in the art.

### [DETAILED DESCRIPTION OF INVENTION]

### [TECHNICAL PROBLEMS]

An object of the present disclosure proposed to solve such problems is to provide a battery pack capable of improving stability by including a structure for blocking or delaying transfer of heat or flame generated in a specific cell block to an adjacent cell block, and a vehicle including the same.

The technical objects to be achieved in the present disclosure are not limited to the technical objects mentioned above, and other technical objects not mentioned will be clearly understood by those skilled in the art to which the present disclosure belongs from the description below.

### [TECHNICAL SOLUTION]

A battery pack according to the present disclosure to achieve the aforementioned objects includes a pack housing, a plurality of cell blocks built in the pack housing, each of the cells blocks being composed of a plurality of battery cells stacked, and a support member provided between adjacent cell blocks to support the adjacent cell blocks and including a plurality of assembling parts interlocking with each other, a blocking part being provided between the assembling parts to block transfer of heat or flame between the adjacent cell blocks.

In the battery pack according to the present disclosure, the plurality of assembling parts constituting the support member may be disposed to face each other.

In the battery pack according to the present disclosure, the assembling parts may have protrusions formed to protrude toward each other, and the protrusions formed on the assembling parts may be disposed to overlap in a vertical direction while being interlocked with each other.

In the battery pack according to the present disclosure, the assembling parts may be respectively provided on both sides of each of the cell blocks, and the protrusion of the assembling part on one side and the protrusion of the assembling part on the other side may be disposed at different positions on the assembling parts.

In the battery pack according to the present disclosure, the protrusion of the assembling part on one side may be formed on the upper part of the assembling part on one side, and the protrusion of the assembling part on the other side may be formed on the lower part of the assembling part on the other side.

In the battery pack according to the present disclosure, the blocking part may have a plate shape covering the protrusion of each of the assembling parts.

In the battery pack according to the present disclosure, a plurality of adjacent assembling parts constituting a single support member may be fastened together through a fastening member.

In the battery pack according to the present disclosure, the adjacent assembling parts may be fastened at a plurality of spaced points through a plurality of fastening members.

In the battery pack according to the present disclosure, the fastening member may have a pin shape penetrating the plurality of adjacent assembling parts simultaneously.

In the battery pack according to the present disclosure, the blocking part may be a plate disposed between the plurality of assembling parts and may be positioned between protrusions overlapping in the vertical direction by being bent a plurality of times.

In the battery pack according to the present disclosure, the plurality of adjacent assembling parts constituting a single support member and the blocking part may be fastened together through a fastening member.

In the battery pack according to the present disclosure, the fastening member may have a pin shape penetrating the plurality of adjacent assembling parts and the blocking part simultaneously.

In the battery pack according to the present disclosure, the blocking part may form a bent surface at a point between the protrusions overlapping in the vertical direction, and the fastening member may penetrate the bent surface of the blocking part.

In the battery pack according to the present disclosure, a bent surface hole through which the fastening member penetrates may be formed in the bent surface of the blocking part, an assembling member may be provided in the bent surface hole of the blocking part, and the fastening member may penetrate the assembling member to fasten to the assembling member.

In the battery pack according to the present disclosure, the assembling member may have a bushing shape having a flange and a neck, and the neck of the bushing may protrude toward one of the assembling parts to temporarily fasten the blocking part and the assembling part and prevent damage to the blocking part during fastening.

In the battery pack according to the present disclosure, a fixing recess may be formed on one surface of one of the assembling parts, and the fixing recess may be formed to correspond to the blocking part such that the blocking part is mounted in the fixing recess.

In the battery pack according to the present disclosure, the blocking part may be mounted in the fixing recess, and the blocking part and one surface of the assembling part on which the blocking part is mounted may form the same plane.

In the battery pack according to the present disclosure, the blocking part may be made of a refractory material.

A vehicle according to the present disclosure includes the above-described battery pack.

### [EFFECT OF INVENTION]

According to the present disclosure, it is possible to provide a battery pack capable of improving stability by including a structure for blocking or delaying transfer of heat or flame generated in a specific cell block to an adjacent cell block, and a vehicle including the same.

The effects obtained from the present disclosure are not limited to the effects mentioned above, and other effects not mentioned can be clearly understood by those skilled in the art to which the present disclosure belongs from the description below.

### [BRIEF DESCRIPTION OF THE DRAWING]

FIG. 1 is a diagram showing a battery pack of the present disclosure.
FIG. 2 is a diagram showing an embodiment of a support member shown in FIG. 1.
FIG. 3 is a diagram showing another embodiment of the support member shown in FIG. 1.
FIG. 4 is a diagram illustrating coupling of a blocking part and the support member of the present disclosure.
FIG. 5 is a top view of the blocking part of the present disclosure.
FIG. 6 is a top view of the blocking part and an assembling member of the present disclosure.
FIG. 7 is a diagram showing an embodiment of the assembling member of the present disclosure.
FIG. 8 is a diagram showing the blocking part of the present disclosure being mounted in and fastened to a fixing recess of the support member.
FIG. 9 is a diagram showing a vehicle to which a battery pack according to an embodiment of the present disclosure is applied.

### [BEST MODE FOR CARRYING OUT THE INVENTION]

In the following description, a detailed description of known functions and configurations incorporated herein will be omitted when it may obscure the subject matter of the present disclosure. The same reference numbers will be used in the drawings to refer to the same or like parts. In addition, the attached drawings are only intended to facilitate easy understanding of the embodiments disclosed in this specification, and the technical ideas disclosed in this specification are not limited by the attached drawings, and should be understood to include all modifications, equivalents, or substitutes included in the spirit and technical scope of the present disclosure.

Although terms such as "first" and "second" may be used to describe various elements, these terms are merely used to distinguish the same or similar elements from each other. The aforementioned terms are used solely to distinguish one component from another. An element described in the singular form is intended to include a plurality of elements unless the context clearly indicates otherwise.

In the present specification, the term "comprise" or "include" is intended to specify the presence of a described feature, number, step, operation, component, part, or a combination thereof, but should be understood as not excluding in advance the possibility of the presence or addition of one or more other features, numbers, steps, operations, components, parts, or combinations thereof. The suffixes "module" and "unit" of elements used in the following description are used for convenience of description and thus can be used interchangeably and do not have any distinguishable meanings or functions.

When a component is "coupled" or "connected" to another component, it should be understood that a third component may be present between the two components although the component may be directly coupled or connected to the other component. When a component is "directly coupled" or "directly connected" to another component, it should be understood that no element is present between the two components.

Hereinafter, embodiments disclosed in this specification will be described in detail with reference to the attached drawings. Regardless of the drawing symbols, identical or similar components will be given the same reference numerals and redundant descriptions thereof will be omitted.

Multiple battery cells may be built into a battery pack in an intermediate form of module or assembly (cell module assembly (CMA)), and in this structure, modules support and fix the battery cells to the battery pack. In this structure, multiple battery cells are first assembled into modules, and then the assembled modules are integrated into one large pack. This structure requires multiple assembling stages and complex connection processes, and waste of materials and space may occur at each stage. This may increase the overall size and weight of the battery pack, increase manufacturing costs, and act as a factor limiting the energy density of the battery.

To solve this problem, there is cell-to-pack technology. Cell-to-pack technology refers to technology for omitting the intermediate module assembly process and assembling battery cells directly into a battery pack.

In a battery pack to which cell-to-pack technology is applied, multiple battery cells are stacked to form a cell block, and the cell block is directly supported and fixed to the battery pack (BP) through a support member and the like. Due to this structure, an intermediate structure such as modules is omitted, which enables increased space efficiency, simplification of the manufacturing process, and weight reduction of the battery pack BP.

Meanwhile, batteries are subjected to stress due to defects in design or manufacturing, excessive charging or discharging, misuse, etc., and if such stress continues, battery cells deteriorate. If battery cells deteriorate and a certain temperature or higher is maintained, a flammable electrolyte inside the battery cells vaporizes and ejects, and the internal pressure of the battery cell increases, causing a fire in the battery cells and a cell block 100 including the battery cells. The cell block 100 where the fire has occurred releases heat or flame to the surroundings, and as a result, a fire occurs in a cell block near the cell block where the fire has occurred and this cell block also releases heat and flame. This process is repeated, causing a chain of TRs of the battery.

However, unlike conventional battery packs, battery packs employing cell-to-pack technology do not have intermediate structures such as modules, and thus may be vulnerable to preventing heat or flames caused by a fire occurring in a specific cell block from being transferred to adjacent cell blocks.

Therefore, in order to solve this problem, a battery pack capable of preventing heat or flames caused by a fire occurring in a specific cell block from being transferred to adjacent cell blocks is required.

The present disclosure blocks heat or flames between adjacent cell blocks 100 or delays transfer of heat or flames to prevent heat and flames caused by a fire occurring in a specific cell block 100 from being transferred to adjacent cell blocks 100, thereby prevent a chain of TRs in cell blocks 100 inside a battery pack and improving the performance and safety of the battery pack BP.

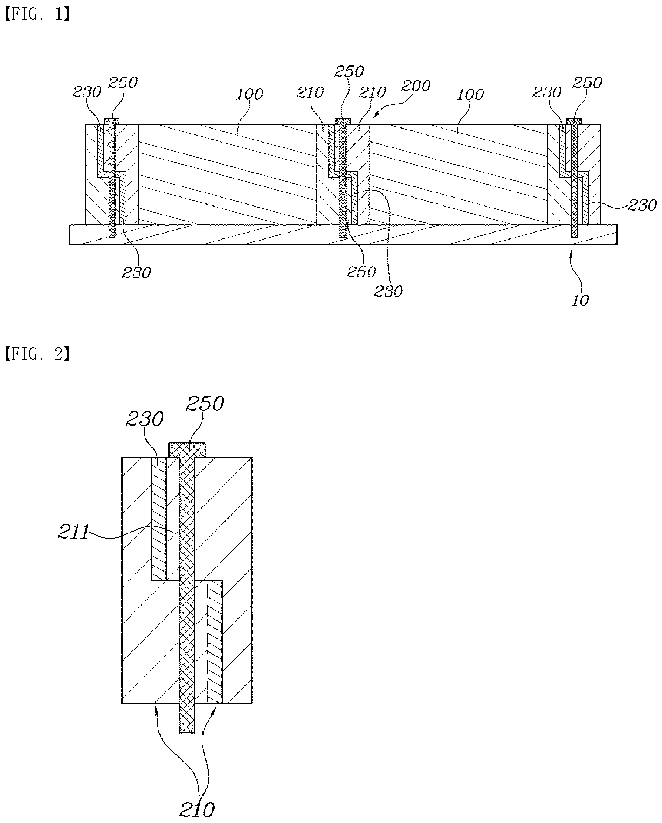

Specifically, a battery pack according to an embodiment of the present disclosure may include a plurality of cell blocks 100, and support members 200 may be coupled to both sides of the cell blocks 100 and built into a pack housing 10, as shown in FIG. 1.

In addition, the support members 200 provided between adjacent cell blocks 100 may support the adjacent cell blocks 100 and include a plurality of assembling parts 210 interlocks each other, and a blocking part 230 may be provided between the plurality of assembling parts 210. The blocking part 230 may effectively block or delay transfer of heat or flame between adjacent cell blocks 100.

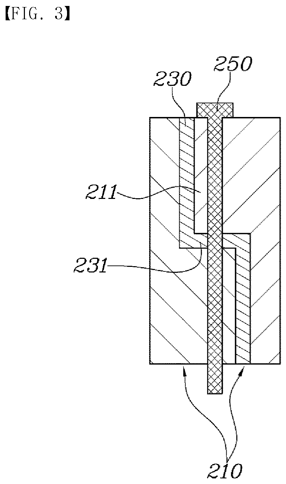

For more firm assembling, a plurality of support members constituting the assembling parts 210 may interlock with each other as shown in FIGS. 2 and 3.

For example, the assembling parts 210 may be composed of a pair of support members, and the plurality of assembling parts 210 constituting the support member 200 may be disposed to face each other as shown in FIGS. 2 and 3.

By employing the aforementioned structure, the cell blocks 100 can be assembled without any gaps, and thus can be installed and assembled more firmly in the battery pack. Incidentally, excellent performance of a battery means high energy density of the battery. Since the battery pack BP is composed of a plurality of cell blocks 100, the energy density of the battery can be increased by densely assembling a plurality of cell blocks 100. Accordingly, in order to improve the performance of the battery, the cell blocks 100 need to be assembled with a high density. Therefore, by densely assembling the cell blocks 100 into the battery pack in a form in which they interlock with each other as described above, the energy density of the battery can be increased, and battery performance can be improved.

For example, the assembling parts 210 may have protrusions 211 formed to protrude to each other, and the protrusions 211 formed on the assembling parts 210 may be disposed to overlap each other in a vertical direction while interlocking with each other. Specifically, the assembling parts 210 are provided on both sides of each cell block 100, and the protrusions 211 of the assembling part 210 on one side and the protrusion 211 of the assembling part 210 on the other side may be disposed at difference positions on the corresponding assembling parts 210. More specifically, the protrusion 211 of the assembling part 210 may be formed on the upper side of the assembling part 210, and the protrusion 211 of the assembling part 210 on the other side may be formed on the lower side of the assembling part 210. In this structure, when assembling the cell blocks 100 into the battery pack, the protrusions 211 of adjacent assembling parts 210 are interlocked with each other and overlap in the vertical direction by simply disposing the support member between adjacent cell blocks 100 without a process of adjusting combination of the support member between adjacent cell blocks 100, and thus the cell blocks 100 can be firmly assembled into the battery pack, and since there is no need to add a separate assembly process, sturdy cell blocks can be assembled inside the battery pack, thereby reducing the assembly time and cost.

As shown in FIGS. 2 and 3, the shape of the protrusion 211 may be a protruding square protrusion shape having a square cross-section. However, this is an example and the shape of the protrusion 211 is not limited thereto.

The blocking part 230 may be formed of a refractory material in order to block transfer of heat or flame between adjacent cell blocks 100 by being provided between the assembling parts 210. More specifically, the blocking part 230 may be formed of a refractory mineral such as mica or a heat-resistant plastic material. However, this is an example and the material of the blocking part 230 is not limited thereto. Any material that can effectively block heat and flame may be used as the material of the blocking part 230.

In an embodiment of the present disclosure, the blocking part 230 may have a plate shape that covers the protrusion 211 of each assembling part 210 as shown in FIG. 2. The blocking part 230 may be combined with the protrusion 211 of the assembling part 210, combined with the assembling part 210 on the other side that comes into contact with the protrusion 211, or combined with all of adjacent assembling parts 210.

The blocking part 230 may be combined with the assembling part 210 through an adhesive, or may be combined with the assembling part 210 by being located in a fixing recess 213 which will be described later.

Through this structure, the blocking part 230 may be inserted by being combined with the protrusion 211 of the assembling part 210 on one side or one side of the assembling part 210 on the other side corresponding thereto. By simply combining the multiple assembling parts 210 in this manner, the blocking part 230 can be positioned between adjacent cell blocks 100 without a separate additional process, thereby reducing assembly costs and time.

In another embodiment of the present disclosure, the blocking part 230 may be a single plate positioned between the assembling parts 210, and may be positioned between protrusions 211 that overlap in the vertical direction by being bent multiple times. A bent surface 231 of the blocking part 230 formed by bending the blocking part 230 multiple times may be positioned between the protrusions 211 of adjacent assembling parts 210 which overlap in the vertical direction.

More specifically, as shown in FIG. 3, the blocking part 230 may be bent twice to simultaneously cover the protrusions 211 of adjacent assembling parts 210 and may be positioned between the protrusions 211 that overlap in the vertical direction. The blocking part 230 may form a bent surface 231 at a point between the protrusions 211 that overlap in the vertical direction.

In order to block or delay transfer of heat and flame emitted due to a fire occurring in a specific cell block to an adjacent cell block, it may be necessary to block a space between adjacent cell blocks without any gaps.

The blocking part 230 of the present disclosure has a shape corresponding to the contact surfaces of adjacent assembling parts 210 and can cover the adjacent assembling parts 210 without any gaps, thereby effectively blocking or delaying transfer of heat and flame occurring in a specific cell block 100 to adjacent cell blocks 100.

A fastening member 250 may fasten adjacent assembling parts 210 and blocking parts 230 constituting one support member 200 together.

For example, the fastening member 250 may have a pin shape that penetrates adjacent assembling parts 210 or blocking parts 230 together.

The fastening member 250 may penetrate the protrusions 211 of the plurality of assembling parts 210 or the bent surface 231 of the blocking part 230. A hole through which the fastening member 250 penetrates may be formed in each of the plurality of assembling parts 210 and the blocking part 230, and a bent surface hole 233 through which the fastening member 250 penetrates may be formed in the bent surface 231 of the blocking part 230. In addition, an assembling member 260 which will be described later may be provided in the bent surface hole 233.

The holes formed in the plurality of assembling parts 210 and the bent surface hole 233 formed in the bent surface 231 of the blocking part 230 may be formed at positions corresponding to each other in the vertical direction such that the pin-shaped fastening member 250 penetrate the holes in the vertical direction to fasten the assembling parts 210 and the blocking part 230.

In order to more effectively fasten adjacent assembling parts 210 and the blocking parts 230 with high strength, the adjacent assembling parts 210 and the blocking parts 230 may be fastened at a plurality of spaced points through the fastening member 250.

The fastening member 250 may have a pole shape extending in the vertical direction, and more specifically, the fastening member 250 may be a pin, a bolt, a screw, a rivet, or the like. The fastening member 250 may be a single pole or a plurality of spaced poles. The vertical length of the fastening member 250 may be the same as the vertical length of the assembling part 210.

Through this structure, the components of the support member 200 can be fastened more effectively, and thus the cell block 100 coupled to the support member 200 can be more effectively assembled into the battery pack. In addition, the pin-shaped fastening member 250 can be positioned between adjacent cell blocks 100 to protect the cell blocks 100 from loads applied from the outside of the battery pack and external impacts. This can prevent deterioration of the cell blocks 100 and prevent a fire in the cell blocks 100 and TR in the battery pack caused by the fire, and thus enable the manufacture of a battery pack that is safer against physical impacts.

For example, when the blocking part 230 is a plate that covers each of the protrusions 211 of the plurality of adjacent assembling parts 210 as shown in FIG. 2, the fastening member 250 may simultaneously penetrate the upper protrusion 211 of the assembling part 210 on one side and the lower protrusion 211 of the assembling part 210 on the other side in the vertical direction.

For example, as shown in FIG. 3, when the blocking part 230 is a single plate positioned between assembling parts 210 and is positioned between protrusions 211 that overlap in the vertical direction by being bent multiple times, and a bent surface 231 is formed at a point between the protrusions 211 that overlap in the vertical direction, the fastening member 250 can fasten the adjacent assembling parts 210 and the blocking part 230 by penetrating the protrusions 211 of the plurality of assembling parts 210 and the bent surface 231 of the blocking part 230.

Meanwhile, the fixing recess 213 is formed on one surface of the support member 200, and the fixing recess 213 is formed to correspond to the blocking part 230 such that the blocking part 230 is positioned in the fixing recess 213.

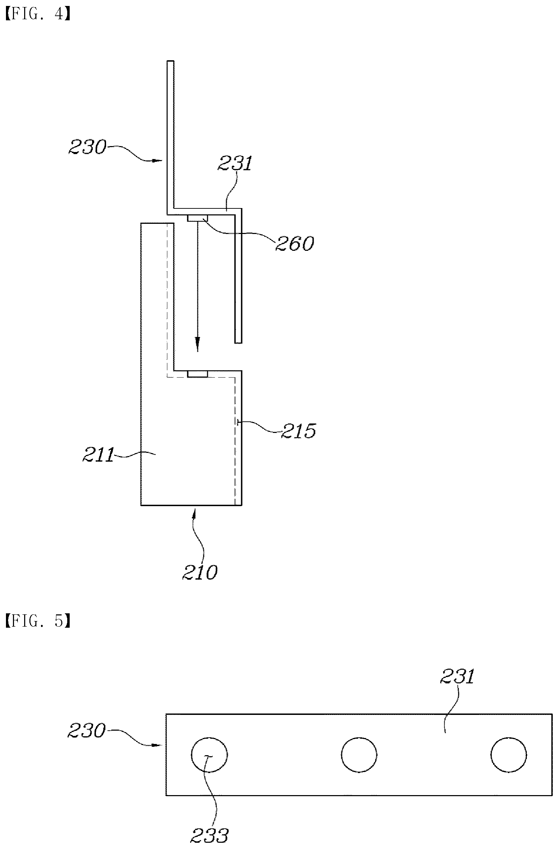

As shown in FIG. 4, the fixing recess 213 may be formed on one surface of an assembling part 210 that comes into contact with another assembling part 210. The fixing recess 213 may be formed in a shape corresponding to the blocking part 230. The fixing recess 213 may be formed over the entire surface of the assembling part 210, and may be formed on the protrusion 211 of the assembling part 210 or on the other surface of the assembling part 210 corresponding to the protrusion 211.

A hole through which the fastening member 250 penetrates may be formed in the fixing recess 213 of the assembling part 210, and the hole may be formed at a position corresponding to the bent surface hole 233 formed in the bent surface 231 of the blocking part 230 in the vertical direction.

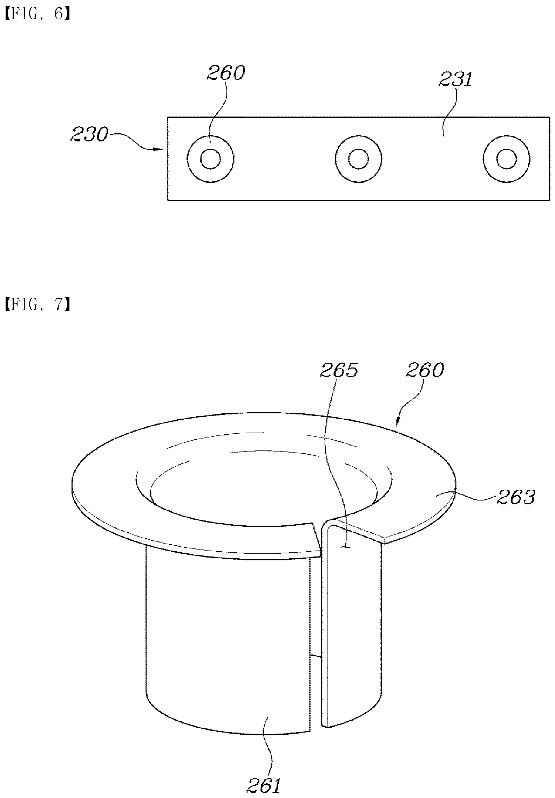

FIG. 5 is a top view of the blocking part 230 according to an embodiment of the present disclosure and FIG. 6 is a top view of the blocking part 230 and an assembling member 260 according to an embodiment of the present disclosure. The blocking part 230 and the assembling member 260 will be described with reference to FIGS. 5 and 6.

As shown in FIG. 5, a plurality of bent surface holes 233 may be formed to be spaced apart from each other on the bent surface 231 of the blocking part 230. As shown in FIG. 6, the assembling member 260 may be provided in each bent surface hole 233 formed in the bent surface 231. The assembling member 260 may be inserted into the bent surface hole 233 of the blocking part 230. Through this structure, the assembling member 260 can temporarily fasten the blocking part 230 and the assembling part 210 to position the blocking part 230 in the fixing recess 213 of the assembling part 210. Accordingly, the blocking part 230 and the assembling part 210 can be easily combined with each other, and the force applied to the assembling part 210 and the blocking part 230 when the fastening member 250 is fastened can be distributed to prevent damage to the assembling part 210 and the blocking part 230.

For example, the assembling member 260 may have a bushing shape composed of a flange 263 and a neck 261 as shown in FIG. 7. The neck 261 may have a cylindrical shape extending in the vertical direction. The flange 263 is integrally formed on the upper end of the neck 261 and has a shape extending in the horizontal direction to limit up-and-down movement of the assembling member 260 and prevent the assembling member 260 from being separated from the bent surface hole 233.

More specifically, the neck 261 of the assembling member 260 may protrude toward one of the plurality of assembling parts 210 and may be inserted into a hole formed in the assembling part 210. Through this structure, the blocking part 230 and the assembling part 210 can be temporarily fastened to each other.

The diameter of the flange 263 may be greater than the diameter of the bent surface hole 233 such that the assembling member 260 can be prevented from being separated from the bent surface hole 233.

In addition, the assembling member 260 may include a cut portion formed on the side. The cut portion 265 may increase the flexibility of the assembling member 260, and when the assembling member 260 is inserted into the bent surface hole 233 and the hole formed in the assembling part 210, provide pressure to the holes.

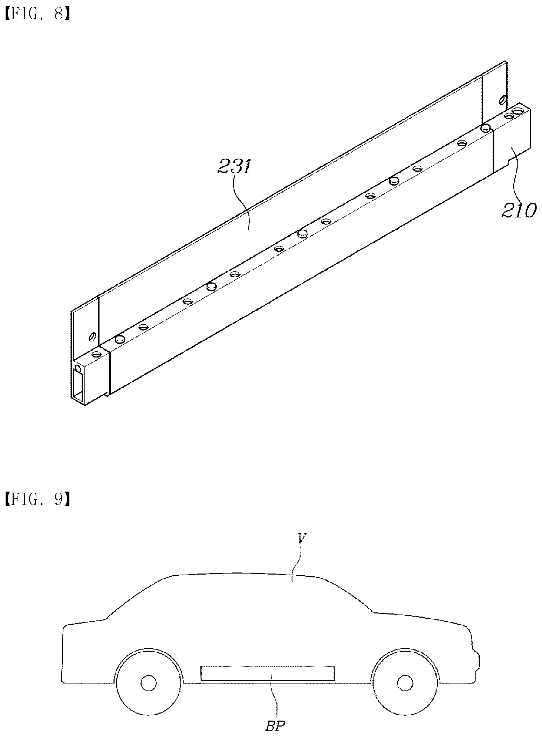

As shown in FIG. 8, the blocking part 230 may be mounted in the fixing recess 213 formed on one side of the assembling part 210.

For example, the plate thickness of the blocking part 230 may be the same as the depth of the fixing recess 213 formed on one side of the assembling part 210. More specifically, when the blocking part 230 is mounted in the fixing recess 213, the blocking part 230 and one side of the assembling part 210 where the blocking part 230 is located form the same plane, thereby enabling firm connection between the blocking part 230 and the assembling part 210.

For example, the fixing recess 213 may be formed in each of the assembling part on one side and the assembling part on the other side. More specifically, the fixing recess 213 formed in the assembling part on one side may be formed on a surface that comes into contact with the assembling part on the other side, and the fixing recess 213 formed in the assembling part on the other side may be formed on a surface that comes into contact with the assembling part on one side. The fixing recess 213 of the assembling part on one side and the fixing recess 213 of the assembling part on the other side may have shapes that face each other and correspond to each other. The blocking part 230 may be disposed to overlap the fixing recess 213 of the assembling part on one side and the fixing recess 213 of the assembling part on the other side. Specifically, the sum of the depth of the fixing recess 213 of the assembling part on one side and the depth of the fixing recess 213 of the assembling part on the other side is equal to the plate thickness of the blocking part 230, and thus the assembling part on one side and the assembling part on the other side can be closely coupled to each other while the blocking part 230 is positioned therebetween. Through this structure, the volume of the support member 200 including the assembling part on one side, the assembling part on the other side, and the blocking part 230 can be reduced, thereby increasing the energy density of the battery pack, and the blocking part 230 can overlap the assembling part on one side and the assembling part on the other side at the same time, thereby enabling more firm coupling of the two assembling parts 210.

FIG. 9 is a diagram showing a vehicle to which the battery pack according to an embodiment of the present disclosure is applied. Referring to this figure, the battery pack according to an embodiment of the present disclosure can be applied to battery packs BP of various vehicles V such as internal combustion engine vehicles, electric vehicles, hybrid vehicles, and fuel cell vehicles, as shown in FIG. 9, and in addition to vehicles V, the battery pack can be applied to battery packs BP in various fields such as an industrial energy storage system (ESS), a household ESS, and small battery packs.

Although the present disclosure has been described above with reference to preferred embodiments, it will be understood by those skilled in the art that various modifications and changes may be made to the present disclosure without departing from the idea and scope of the present disclosure as set forth in the following claims.

## Claims

1. A battery pack comprising:
a pack housing;
a plurality of cell blocks built in the pack housing, each of the cells blocks being composed of a plurality of battery cells stacked; and
a support member provided between adjacent cell blocks to support the adjacent cell blocks and including
a plurality of assembling parts interlocking with each other,
a blocking part being provided between the assembling parts to block transfer of heat or flame between the adjacent cell blocks.

2. The battery pack of claim 1, wherein the plurality of assembling parts constituting the support member is disposed to face each other, the assembling parts haveprotrusions formed to protrude toward each other, and the protrusions formed on the assembling parts are disposed to overlap in a vertical direction while being interlocked with each other.

3. The battery pack of claim 2, wherein the assembling parts are respectively provided on both sides of each of the cell blocks, and the protrusion of the assembling part on one side and the protrusion of the assembling part on the other side are disposed at different positions on the assembling parts.

4. The battery pack of claim 3, wherein the protrusion of the assembling part on one side is formed on the upper part of the assembling part on one side, and the protrusion of the assembling part on the other side is formed on the lower part of the assembling part on the other side.

5. The battery pack of claim 2, wherein the blocking part has a plate shape covering the protrusion of each of the assembling parts.

6. The battery pack of claim 1, wherein a plurality of adjacent assembling parts constituting a single support member is fastened together through a fastening member, the adjacent assembling parts are fastened at a plurality of spaced points through a plurality of fastening members, and the fastening member has a pin shape penetrating theplurality of adjacent assembling parts simultaneously.

7. The battery pack of claim 2, wherein the blocking part is a plate disposed between the plurality of assembling parts and is positioned between protrusions overlapping in the vertical direction by being bent a plurality of times.

8. The battery pack of claim 7, wherein the plurality of adjacent assembling parts constituting a single support member and the blocking part are fastened together through a fastening member, and the fastening member has a pin shape penetrating the plurality of adjacent assembling parts and the blocking part simultaneously.

9. The battery pack of claim 8, wherein the blocking part forms a bent surface at a point between theprotrusions overlapping in the vertical direction, and the fastening member penetrates the bent surface of the blocking part.

10. The battery pack of claim 9, wherein a bent surface hole through which the fastening member penetrates is formed in the bent surface of the blocking part, an assembling member is provided in the bent surface hole of the blocking part, and the fastening member penetrates the assembling member to fasten to the assembling member.

11. The battery pack of claim 10, wherein the assembling member has a bushing shape having a flange and a neck, and the neck of the bushing protrudes toward one of the assembling parts to temporarily fasten the blocking part and the assembling part and prevent damage to the blocking part during fastening.

12. The battery pack of claim 1, wherein a fixing recess is formed on one surface of one of the assembling parts, and the fixing recess is formed to correspond to the blocking part such that the blocking part is mounted in the fixing recess.

13. The battery pack of claim 12, wherein the blocking part is mounted in the fixing recess, and the blocking part and one surface of the assembling part on which the blocking part is mounted form the same plane.

14. The battery pack of claim 1, wherein the blocking part is made of a refractory material.

15. A vehicle comprising the battery pack of claim 1.
